## Europäisches Patentamt
## European Patent Office
## Office européen des brevets

(11) Publication number: **0 066 712**
**B1**

⑱
(12) **EUROPEAN PATENT SPECIFICATION**

(45) Date of publication of patent specification: **10.09.86**

(21) Application number: **82103819.7**

(22) Date of filing: **04.05.82**

(51) Int. Cl.⁴: **B 60 B 21/10,** B 60 C 15/02, B 60 C 3/00, B 60 B 21/12

(54) **Improvements in tire and wheel configuration.**

(30) Priority: **08.06.81 PCt/us81/00758**

(43) Date of publication of application:
**15.12.82 Bulletin 82/50**

(45) Publication of the grant of the patent:
**10.09.86 Bulletin 86/37**

(84) Designated Contracting States:
**DE FR GB IT**

(56) References cited:
**DE-A-2 209 551**
**DE-A-2 414 885**
**DE-A-2 441 235**
**FR-A- 666 032**
**US-A- 607 043**
**US-A-2 709 472**
**US-A-2 787 312**
**US-A-2 822 017**
**US-A-3 117 164**
**US-A-3 130 965**
**US-A-3 448 783**
**US-A-3 930 527**
**US-A-3 998 258**
**US-A-4 232 723**

(73) Proprietor: **CATERPILLAR TRACTOR CO.**
**100 Northeast Adams Street**
**Peoria Illinois 61629 (US)**

(72) Inventor: **Grawey, Charles Edward**
**210 E. Orchard Place**
**Peoria Illinois 61603 (US)**
Inventor: **Groezinger, John James**
**Box 189 Bristol Hollow Road**
**Dunlap Illinois 61525 (US)**

(74) Representative: **Wagner, Karl H.**
**WAGNER & GEYER Patentanwälte**
**Gewuerzmuehlstrasse 5 Postfach 246**
**D-8000 München 22 (DE)**

Courier Press, Leamington Spa, England.

## Description

Technical Field

This invention relates generally to tire construction and more particularly to means for the reduction of rolling resistance by establishing a tire-rim interface for decreasing movement of the tire bead seat portion with respect to the rim.

Background Art

It is well known that the rolling resistance of the tires of a moving vehicle constitutes a significant portion of the resistive force that must be overcome by the vehicle. This is especially true for those vehicles having pneumatic tires. The losses owing to rolling resistance in tires often amount to as much as 15% of the power produced by the vehicle's engine.

There are three prime sources occasioning these rolling resistance losses. A reduction in these losses would be desirable. The first of the three sources of rolling resistance, aerodynamic drag, generally amounts to less than 5% of the total rolling resistance of the tire and hence is relatively insignificant. The second, tire-to-ground frictional losses typically contributes between 10 to 20 percent of the total rolling resistance of the tires. However, it is generally disadvantageous to decrease the tire-to-ground losses. This is due to the fact that traction is a concomitant of these tire-road frictional losses, consequently these losses yield necessary safety and motive advantages.

The third, and by far the greatest, cause of rolling resistance in pneumatic tires results from losses internal to the tire itself. In an operational mode the tire rolls, thus there is a loading of each differential unit of the elastomeric material comprising the tire. The loading is cyclical. Consequently, adjacent portions of the tire periodically move relative to each other, expending energy in the process. Such losses are termed "hysterisis losses".

This cyclically loading, causing tire deformation, also tends to cause movement of the tire relative to the rim supporting it. Standard elastomeric tires are generally structured so that beads of the tire are retained on the rim by an axially directed interference fit. For closed torus tires, the roll-restraining hoops (RRH), which are retained by a radially directed interference fit, achieve this function. In many tires this interference fit permits relative circumferential and/or axial motion between the bead or RRH and the rim as the tire rotates. This relative motion results in frictional losses additional to the hysterisis losses. It is believed that at any given time only the most greatly loaded portion of the rim contacting portion of the tire moves significantly relative to the rim. Such localized relative motion is termed "scrubbing".

"Scrubbing" serves not only to waste energy, but is especially detrimental in that most of this wasted energy is degraded to heat. Heat build up can actually impose an operating limitation on the vehicle in that the loading and duration of operation of the tires should not be above a recommended operational temperature.

These losses internal to the wheel are especially troublesome in the aircraft and heavy equipment industries. The rate at which energy is expended by the relative motion discussed above is directly related in magnitude to both the loading induced deflection of the tire and the rate of rotation of the wheel. The heat buildup in tires under great deflection, as in heavy earthmoving vehicles, is, then, very pronounced. Even with established speed and load limitations, such tires are often destroyed or damaged due to overheating.

Similarly, with aircraft becoming increasing greater in weight and landing speed, aircraft tire manufacturers are facing ever-greater heat buildup problems. The operating pressure of many aircraft tires has been increased in efforts to stiffen the tire and hence decrease rolling resistance. This has served to decrease heat build-up. However, the use of elevated pressure has had the detrimental concomitant of increasing the loading imposed by the aircraft on runways resulting, in some instances, in accelerated runway deterioration. Some airports have forbidden certain aircraft with these high pressure tires to land.

The present invention is directed to overcoming one or more of the problems as set forth above.

The following patent documents relate to background art which can be regarded as useful for understanding the invention. US—A—3,998,258 relates to an expandable tire rim arrangement upon which a hollow toroidal pneumatic tire is disposed. The tire has a radially inner rim mounting surface thereon and a radially outer chamber facing surface which provides a relatively thin tubular section centrally thereof.

Adjacent the intersection of this tubular section and each of the sidewalls the tire section is somewhat thicker and internally profiled in a predetermined manner to receive a pair of transversely spaced and radially inwardly disposed roll restraining hoops 28.

US—A—2,822,017 relates to tubeless tire and divided rim assemblies wherein air-retaining means are disposed radially between one tire bead and the rim, said air-retaining means comprising an annular radial-load-bearing portion disposed adjacent the heel of the tire bead and engaging tire-retaining means radially inwardly of the bead heel, and a flexible seating portion of rubber material having radially spaced generally axially extending lips extending towards the toe of the tire bead, the radially inner of said lips being pressed pneumatically into said sealing engagement with a rim base section axially inwardly of the axially inner edge of the tire retaining means, the radially outer lip being in sealing engagement with said tire bead.

US—A—2,787,312 relates to a wheel rim sealing band for tubeless vehicle tires. According to the teaching of said document, air for inflating the tire is introduced directly into the chamber of the

tire and air tightness against the sides of the rim is ensured by bands of rubber of other similar air tight resilient material pressed tightly between the tire and the rim and supported in the angle formed between the rim and the flange of the wheel rim.

Disclosure of the Invention

In accordance with the present invention a wheel assembly as set forth in the first part of claim 1 is previously known from US—A—-3,998,258. The invention is characterized by the features of the second part of claim 1. Preferred embodiments of the invention are disclosed in the dependent claims.

In many vehicles having wheels with rims and tires, a significant portion of the power developed by the vehicle is expended in overcoming the rolling resistance that is inherent in the use of tires. In certain types of tires, a portion of this rolling resistance is the result of relative motion between the tire and the rim. In the present invention, means are provided for decreasing or eliminating the extent of this relative motion. This results in a reduction in the energy wasted as the wheel moves, thereby increasing the efficiency of the vehicle. An additional and often more significant result is a decrease in the rate at which heat builds up in the tire.

Brief Description of the Drawing

Fig. 1 shows a diagrammatic cross sectional view of a wheel incorporating an embodiment of the present invention, the wheel of this embodiment includes a two-piece rim;

Fig. 2 shows a diagrammatic view of a sidewall, shoulder and rim portion of a tire incorporating a second embodiment of the present invention, the rim utilized in this embodiment is a single-piece right, cylindrical rim;

Fig. 3 shows a similar view of a third embodiment of the present invention, utilized with a two-piece rim;

Fig. 4 shows a similar view of a fourth embodiment of the present invention utilized with a two-piece rim;

Fig. 5 shows a view of a fifth embodiment of the present invention mounted on a single-piece, right cylindrical rim;

Fig. 6 shows a similar view of a sixth embodiment of the present invention mounted on a two-piece rim; and

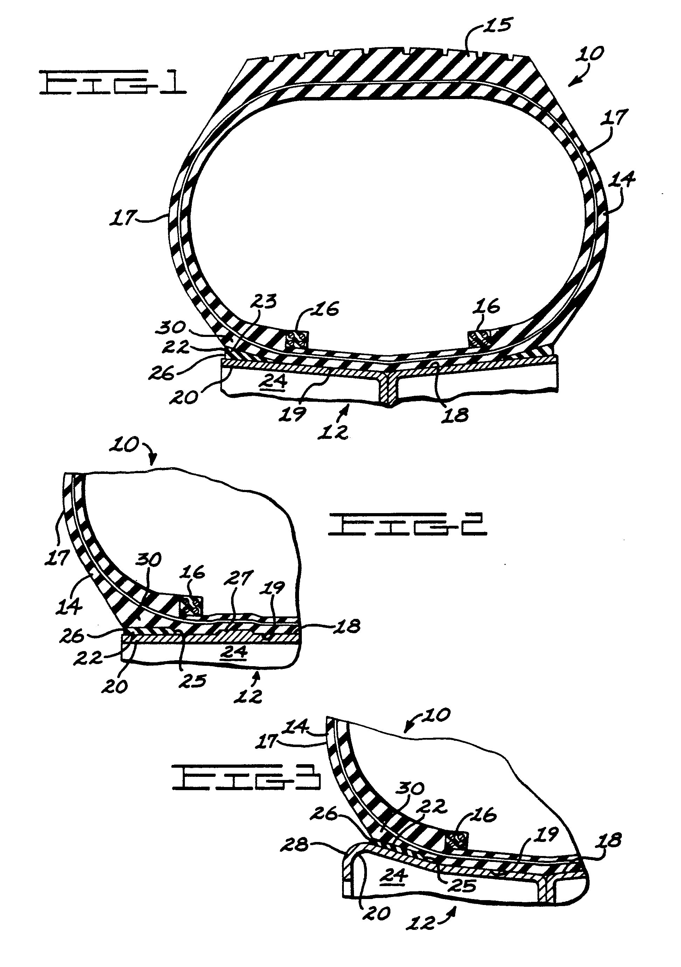

Best Mode for Carrying Out the Invention Referring to Fig. 1, a wheel embodying certain of the principles of the present invention is generally indicated by the reference numeral 10. In the preferred embodiment, the wheel 10 is of the class having a rim assembly 12 and a pneumatic, elastomeric closed torus tire 14 retained in said rim assembly 12 by an interference fit between roll restraining hoops 16 on said tire 14 and a tire contacting periphery 18 on said rim assembly 12.

The rim 12 is preferably a two-piece rim having a taper of greater than 3°, preferably between 5° and 7°. One purpose of this taper is to limit the movement of the roll restraining hoops 16 away from the center of the rim assembly 12. The magnitude of the taper immediately proximate the roll restraining hoops 16 is especially critical. It is at this location, that is, where the rim assembly 12 directly faces the innermost portion of each roll restraining hoop 16, that the taper should preferably be sized between about 5° and 7°.

The tire retaining periphery 18 contacts a rim assembly contacting periphery 19 of the tire 14. The tire 14 also has a tread portion 15 which may comprise a belt (not shown), and sidewall portions 17.

While the preferred embodiment of the present invention comprises a closed torus tire 14 mounted on a two-piece rim 12, the present invention is not limited to use with closed torus tires but is broadly suited for any wheels having tires not permanently bonded to the member supporting the tire.

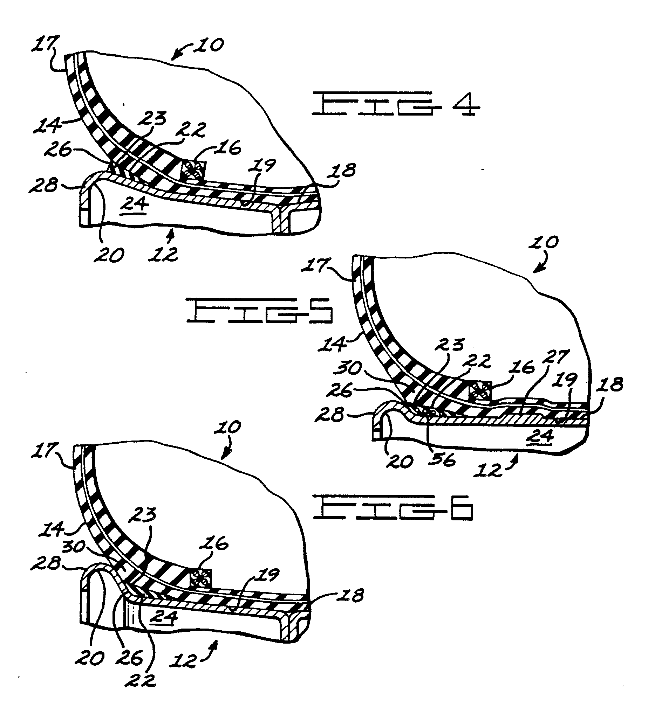

More specifically, the present invention is not limited to use with two-piece rims. A one-piece rim, well known to those skilled in the art, may also receive a tire 14 embodying principles of the present invention. Such a one-piece rim, as shown in Figs. 2 and 5 may take the form of a right cylinder. In this embodiment use of a split band style rim is preferred.

The rim assembly 12 has twin circumferential rim edge portions 20 distal from a plane circumferentially bisecting the rim assembly 12. Affixed to the rim assembly 12 at a location adjacent each rim edge portions 20 is an annular elastomeric element 22, preferably, as shown in Fig. 1, an annular wedge fashioned of rubber. As shown, the wedge shaped elastomeric element 22 has a thick portion 23 and is oriented with this thick portion 23 nearest the rim edge portions 20. The affixation of the elastomeric element 22 to the rim assembly 12 is preferably by a bond, such as by vulcanization or epoxy bonding. Preferably, the annular elastomeric element 22 does not extend to a position immediately intermediate the roll restraining hoop 16 and the rim 12.

In an alternate embodiment, shown in Fig. 2, the annular elastomeric element 22 has a substantially constant thickness. An end 25 of the elastomeric element 22 nearest the center of the rim assembly 12 may be tapered to support the rim assembly contacting periphery 19 of the tire 14 intermediate the constant thickness portion of the elastomeric element 22 and the portion of metallic rim 24 in direct contact with the tire 14. This embodiment may be used with a one-piece right cylindrical rim having hoop restraining portions 27, as shown, or may be used with a tapered two-piece rim.

As shown in Figs. 1—6, each of the elastomeric elements 22 preferably extends so as to contact substantially all of that portion of the rim assembly contacting periphery 19 of the tire 14 which is more distal from the circumferential plane of symmetry of the tire 14 than are the roll restraining hoops 16. That is, each of the elastomeric elements 22 extends from a position adjacent a roll restraining hoop 16 to a position adjacent the corresponding rim edge portion 20. The metal-rubber interface between the tire 14 and the rim assembly 12 intermediate each roll restraining hoop 16 and the corresponding one of the rim edge portions 20 is consequently minimized or eliminated.

In those embodiments described heretofore which incorporate a two-piece rim, the rim assembly 12 comprises a metallic rim 24 with the annular elastomeric element 22 affixed thereto. At a position adjacent each roll restraining hoop 16 the metallic rim 24 extends at an angle in the range of between about 3° to 9° and preferably in the range of about 5° to 7° with respect to the radial axis of the rim assembly 12. The rim 24 continues extends at this constant angle to the rim edge portion 20.

In a third embodiment, shown in Fig. 3, the metallic rim 24 may extend to an angle of between 10 and 80 degress intermediate the roll restraining hoop 16 and the rim edge portion 20 with the elastomeric element 22 being an annular band rather than a wedge. That portion of the rim 24 immediately adjacent the roll restraining hoop 16 preferably is in the range of about 4 to 9 degrees. A fourth embodiment, detailed in Fig. 4, is similar to the third embodiment but has a wedge-shaped annular elastomeric element 22.

In a fifth embodiment of the present invention, shown in Fig. 5, the metallic rim 24 extends to contact an outer face 26 of the annular elastomeric element 22. This outer face 26 is that portion of the elastomeric element which is furthest from the center of the rim assembly 12. As also shown in Fig. 5, the metallic rim 24 may have a lip 28 which, having extended radially outward to contact the outer face 26, then reverses and extends inward. This lip 28 presents a smooth surface to the sidewalls 17 of the tire 14 minimizing the likelihood of damage to the sidewalls 17 should they be forced into contact with the lip 28. This lip 28 also serves to mitigate potential extrusion of the annular elastomeric elment 22. The fifth embodiment is shown having a one-piece rim, but may alternatively have a tapered, two-piece rim.

In a sixth embodiment, shown in Fig. 6, the rim lip 28 extends not only around the annular element outer face 26 but also around a shoulder portion 30 of the tire 14. In this embodiment, it is especially preferable that the metallic rim 24 turn downward to form a smooth lip 28.

In certain applications it is advantageous to include circumferentially extending strengthening elements 56 in the elastomeric elements 22. These strengthening elements 56 preferably assume the form of wires or strands embedded in the elastomeric elements 22 and serve to strengthen and render more durable the elastomeric elements. Additionally, the strengthening elements 56 can be so sized as to establish an interference fit between the elastomeric element 22 and the metallic rim 24 obviating the need for bonding the elastomeric element 22 to the metallic rim 24. These strengthening elements 56 are shown in the embodiment of Fig. 5.

As will by now be apparent, numerous combinations of elastomeric elements 22 of various profiles and metallic rims 24 of various configurations may be utilized to obtain a functional elastomeric element 22 — tire 14 interface. This interface may, in cross-section, be defined by a curve as well as by a line or series of intersecting lines.

In the present invention, it is not necessary that there be any additional elastomeric element intermediate the two roll restraining hoops 16. The detrimental scrubbing is believed to occur proximate the shoulder portion 30, hence it is this region which it is most desirable to restrain.

Industrial Applicability

In many applications it is undesirable to bond a tire to the rim by which it is supported. In the prior art, a tire is generally maintained on its rim by interference fit alone, establishing a metal-rubber interface across which relative motion, such as chaffing, occurs.

The present invention serves to increase the coefficient of friction between the tire 14 and the rim assembly 12 of a wheel 10. This increased coefficient of friction stems from the fact that the only non-bonded interface between the shoulder 30 of the tire 14 and the rim assembly 12 is rubber-to-rubber rather than metal-to-rubber. That is, if motion is to occur between the tire 14 and rim assembly 12 of the present invention, this motion will be resisted by the friction across a rubber-to-rubber interface rather than a rubber-to-metal interface. The increased coefficient of friction serves to reduce or eliminate relative motion between the tire 14 and rim assembly 12 during use of the wheel consequently reducing the rolling resistance of a wheel 10 incorporating the present invention.

The use of a wedge shaped annular element 22 is especially advantageous in that it provides an increased inward loading to the shoulder 30 of the tire. This provides an increased interference fit which is partially inwardly directed. This assists in overcoming outwardly directed forces imposed upon the shoulder area in operation of the wheel.

The extension of the metallic rim 24 to come around the outer face 26 of the annular element 22 prevents plastic deformation and extrusion of the annular element 22. This is especially important for annular elements 22 which are thick or wedge shaped. It is also beneficial to continue the extension of the rim lip 28 to contact the shoulder 30 of the tire 14. This provides additional support to the shoulder area of the tire 14 tending to further restrain it from motion relative to the rim assembly.

It should be noted that the use of the annular elastomeric element serves to decrease the possibility of intrusion of grit between the tire 14 and rim assembly 12.

**Claims**

1. A wheel assembly (10) comprising a rim portion (24) having a tire retaining periphery (18), and a closed torus tire (14) mounted on said rim portion (24) and having a pair of roll restraining hoops (16) and a rim contacting periphery (19), said rim contacting periphery including a shoulder portion (30) positioned axially outward from each of said roll restraining hoops (16), characterized by a pair of elastomeric elements (22) affixed to said rim portion (24), each of said elastomeric elements (22) being positioned between one of said shoulder portions (30) of the closed torus tire (14) and the adjacent portion of the tire retaining periphery (18).

2. The wheel assembly (10) as set forth in claim 1 wherein said elastomeric element (22) is an annular rubber element coaxial with and bonded to said rim portion (24).

3. The wheel assembly (10) as set forth in claim 1 or 2 wherein said rim portion (24) includes rim edges (20) and said elastomeric element (22) includes an outer face (26) proximite the corresponding one of said rim edges (20).

4. The wheel assembly (10) as set forth in claim 3 wherein each of said rim edges (20) includes a rim lip (28) in contact with said outer face (26).

5. The wheel assembly (10) as set forth in claim 3 or 4, wherein said elastomeric element (22) is annular and of wedge shape profile having a thick portion (23) abutting said rim edge (20).

6. The wheel assembly (10) as set forth in any of claims 3—5, wherein said rim edge (20) extends to contact said shoulder portion (30).

7. The wheel assembly (10) as set forth in any of claims 2—6, wherein said elastomeric element (22) contains at least one strengthening element (56) embedded therein.

8. The wheel assembly (10) as set forth in claim 7, wherein said strengthening element (56) extends circumferentially through said elastomeric element (22).

9. The wheel assembly (10) as set forth in claim 8, wherein said strengthening element (56) is metallic.

**Revendications**

1. Ensemble de roue (10) comprenant une partie de jante (24) comportant une périphérie (18) de retenue d'un pneumatique, et un pneumatique (14) fermé et de forme torique, monté sur ladite partie de jante (24) et comportant une paire de tringles antiroulis (16) et une périphérie (19) de contact avec la jante, ladite périphérie de contact avec la jante comprenant une partie d'épaulement (30) positionnée axialement à l'extérieur de chacune desdites tringles antiroulis (16), caractérisé par une paire d'éléments élastomères (22) fixés à ladite partie de jante (24), chacun desdits éléments élastomères (22) étant positionné entre l'une desdites parties d'épaulement (30) du pneumatique fermé et de forme torique (14) et la partie adjacente de la périphérie (18) de retenue du pneumatique.

2. Ensemble de roue (10) selon la revendication 1, dans lequel ledit élément élastomère (22) est un élément annulaire en caoutchouc coaxial avec ladite partie de jante (24) et collée à celle-ci.

3. Ensemble de roue (10) selon la revendication 1 ou 2, dans lequel ladite partie de jante (24) comprend des bords de jante (20) et ledit élément élastomère (22) comporte une face extérieure (26) au voisinage du bord de jante (20) correspondant.

4. Ensemble de roue (10) selon la revendication 3 dans lequel chacun desdits bords de jante (20) comprend une lèvre de jante (28) en contact avec ladite face extérieure (26).

5. Ensemble de roue (10) selon la revendication 3 ou 4, dans lequel ledit élément élastomère (22) est annulaire et présente un profil en forme de coin ayant une partie épaisse (23) venant buter contre ledit bord de jante (20).

6. Ensemble de roue (10) selon l'une quelconque des revendications 3—5, dans lequel ledit bord de jante (20) s'étend jusqu'à vernir en contact avec ladite partie d'épaulement (30).

7. Ensemble de roue (10) selon l'une quelconque des revendications 2—6, dans lequel ledit élément élastomère (22) contient au moins un élément renforçateur (56) noyé dans ledit élément.

8. Ensemble de roue (10) selon la revendication 7, dans lequel ledit élément renforçateur (56) s'étend circonférentiellement dans ledit élément élastomère (22).

9. Ensemble de roue (10) selon la revendication 8, dans lequel ledit élément renforçateur (56) est métallique.

**Patentansprüche**

1. Radanordnung (10), die folgendes aufweist: einen Felgenteil (24) mit einem Reifenhalteumfang (18) und einem einen geschlossenen Torus bildenden Reifen (14), angeordnet auf dem Felgenteil (24) und mit einem Paar von rolleinschränkenden Reifen (16) und einem Felgenkontaktumfang (19), wobei der Felgenkontaktumfang einen Schulterteil (30) aufweist, der axial nach außen gegenüber jedem der Rolleinschränkungsreifen (16) angeordnet ist, gekennzeichnet, durch ein Paar von Elastomerelementen (22), befestigt am Felgenteil (24), wobei jedes der Elastomerelemente (22) zwischen einem der Schulterteile (30) des einen geschlossenen Torus aufweisenden Reifens (14) und dem benachbarten Teil des Reifenhalteumfangs (18) angeordnet ist.

2. Radanordnung (10) nach Anspruch 1, wobei das Elastomerelement (22) ein ringeförmiges Gummielement ist, und zwar coaxial angeordnet und verbunden mit dem Felgenteil (24).

3. Radanordnung (10) nach Anspruch 1 oder 2, wobei der Felgenteil (24) Felgenkanten (20) aufweist, und das Elastomerelement (22) eine Außenstirnfläche (26) umfaßt, und zwar benachbart zu der entsprechenden der Felgenkanten (20).

4. Radanordnung (10) nach Anspruch 3, wobei die Felgenkanten (20) eine Felgenlippe (28) in Berührung mit der erwähnten Außenstirnfläche (26) aufweisen.

5. Radanordnung (10) nach Anspruch 3 oder 4, wobei das Elastomerelement (22) ringförmig ist und ein keilförmiges Profil aufweist, und zwar mit einem Dickenteil (23) anstoßend an der Felgenkante (20).

6. Radanordnung (10) nach einem der Ansprüche 3 bis 5, wobei die Felgenkante (20) sich in Berührung mit dem Schulterteil (30) erstreckt.

7. Radanordnung (10) nach einem der Ansprüche 2 bis 6, dadurch gekennzeichnet, daß das Elastomerelement (22) mindestens ein darinnen eingebettetes Verstärkungselement (56) aufweist.

8. Radanordnung (10) nach Anspruch 7, dadurch gekennzeichnet, daß das Verstärkungselement (56) sich umfangsmäßig durch das Elastomerelement (22) erstreckt.

9. Radanordnung (10) nach Anspruch 8, dadurch gekennzeichnet, daß das Verstärkungselement (56) metallisch ist.

FIG-1

FIG-2

FIG-3

FIG 4

FIG-5

FIG-6